Europäisches Patentamt

European Patent Office

Office européen des brevets

(19)

(11) **EP 1 334 994 A1**

(12) # EUROPEAN PATENT APPLICATION

(43) Date of publication:
**13.08.2003 Bulletin 2003/33**

(51) Int Cl.⁷: $C08K\ 5/00$

(21) Application number: **02075622.7**

(22) Date of filing: **08.02.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **SOLVAY POLYOLEFINS EUROPE - BELGIUM (Société Anonyme)**
**1050 Bruxelles (BE)**

(72) Inventor: **Plume, Denis**
**1030 Brussels (BE)**

(74) Representative: **Smith, Julian Philip Howard et al**
**BP International Limited,**
**Group Patents & Agreements,**
**Chertsey Road**
**Sunbury-on-Thames, Middlesex TW16 7LN (GB)**

(54) **Polyethylene-based composition**

(57)    Polyethylene-based composition comprising at least two different phenolic antioxidants (AO1 and AO2) and at least one inorganic coloured pigment wherein wherein the amounts of AO1 and AO2 each range independently from 0.001 to 0.3 % by weight with respect to the polyethylene weight, and the amount of inorganic coloured pigment ranges from 0.001 to 3 % by weight with respect to the polyethylene weight.

**EP 1 334 994 A1**

Printed by Jouve, 75001 PARIS (FR)

**Description**

The present invention relates to a polyethylene-based composition and its use for the manufacturing of pipes and fittings, especially pipes and fittings used for drinking-water transport.

Patent application WO 01/62839 A1 describes a bimodal polyethylene-based composition for water pipes comprising two phenolic antioxidants, a phosphite stabilizer and an blue phtalocyanine pigment. This composition suffers from serious drawbacks, such as migration of copper from the blue phtalocyanine pigment into the water which limits its use for drinking-water transport applications, as well as dimensional stability problems such as shrinkage and warping giving rise to fitting problems and fragility related to internal stress of shaped objects comprising such a composition. Moreover it is difficult to obtain a good dispersion of the phtalocyanine pigments in the compositions so that expensive techniques are necessary to obtain compositions suitable for industrial use.

On the other hand, the use of mineral pigments in polyolefins is known. However, polyethylene-based compositions comprising inorganic pigments are known to have limited UV weathering resistance which makes them not well suitable for applications where the objects made are exposed to UV weathering.

It has now been found that appropriate combinations of selected coloured inorganic pigments with phenolic antioxidants (AO) overcome these problems.

According to a first aspect, the present invention concerns a polyethylene-based composition comprising at least two different phenolic antioxidants (AO1 and AO2) and at least one inorganic coloured pigment wherein the amounts of AO1 and A02 each range, independently, from 0.001 to 0.3 % by weight with respect to the polyethylene weight, and the amount of inorganic coloured pigment ranges from 0.001 to 3 % by weight with respect to the polyethylene weight.

A second aspect of the present invention relates to the use of such compositions for the manufacturing of pipes and fittings, especially pipes and fittings intended for drinking-water transport.

Pipes and fittings comprising such a polyethylene-based composition are a third aspect of the present invention.

The polyethylene-based composition according to the present invention comprises at least two different phenolic antioxidants (AO1 and AO2). Within the framework of the present invention, by phenolic antioxidants is meant primary antioxidants bearing at least one phenol group and reacting with free peroxide radicals originating from the oxidation of the polyethylene. Generally these phenol type antioxidants are chosen from sterically hindered phenols such as o-substituted phenols, 2,6-dialkylphenols, bisphenols, amides ofbeta-(3,5-di-t-butyl-4-hydroxyphenyl)-propionic acid, esters ofbeta-(3,5-di-t-butyl-4-hydroxyphenyl)-propionic acid with mono- or polyvalent alcohols.

Phenolic antioxidant AO1 is preferably selected from :

   bis[3,3-bis-( 4-hydroxy-3-tert-butyl phenyl )butanoic acid]glycolester (I),
   4,4',4"-[(2,4,6-trimethyl-1,3,5-benzenetriyl)tris(methylene )]tris[2,6-bis(1,1-dimethylethyl)phenol] (II),
   1,3,5-triazine-2,4,6(1H,3H,5H)-trione,1,3,5-tris[[3,5-bis(1,1-dimethylethyl)-4-hydroxyphenyl]methyl]- (III),
   4,4',4"-(1-methyl-1-propanyl-3-ylidene)tris[2-(1,1-dimethylethyl)-5-methylphenol (IV),
   2,6-bis[[3-(1,1-dimethylethyl)-2-hydroxy-5-methylphenyl]octahydro-4,  7-methano-1  H-indenyl]-4-methyl-phenol (V),
   benzenepropanoic acid, 3-(1,1-dimethylethyl)-4-hydroxy-5-methyl-, 2,4,8,10-tetraoxaspiro[5.5]undecane-3,9-diyl-bis(2,2-dimethyl-2,1-ethanediyl) ester (VI),

and their mixtures.

Phenolic antioxidant AO2 is preferably selected from :

   pentaerytrityl tetrakis(3,5-di-tert-butyl-4-hydroxyphenyl) propionate (VII), octadecyl-3-(3',5'-di-tert-butyl-4-hydroxyphenyl) propionate (VIII), and their mixtures.

Preferred are compositions wherein AO1 is compound (I). Advantageously, AO2 is compound (VII). Compositions comprising compound (I) and compound (VII) are particularly preferred.

Preferably, the amount of phenolic antioxidant AO1 is at least 0.005 % by weight, more preferably at least 0.01 % by weight, with respect to the polyethylene weight. An amount of AO1 of at least 0.04 % by weight with respect to the polyethylene weight is especially preferred. The amount of AO1 is preferably at most 0.2 % by weight, more preferably at most 0.15 % by weight with respect to the polyethylene weight. An amount of AO1 of at most 0.1 % by weight with respect to the polyethylene weight is especially preferred.

Preferably, the amount of phenolic antioxidant AO2 is at least 0.005 % by weight, more preferably at least 0.01 % by weight, with respect to the polyethylene weight. An amount of AO2 of at least 0.04 % by weight with respect to the polyethylene weight is especially preferred. The amount of AO2 is preferably at most 0.2 % by weight, more preferably at most 0.15 % by weight with respect to the polyethylene weight. An amount of AO2 of at most 0.1 % by weight with respect to the polyethylene weight is especially preferred.

Advantageously, the total amount of AO1 and AO2 is at least 0.01 % by weight, more preferably at least 0.02 % by weight with respect to the polyethylene weight. Total amounts of AO1 and AO2 of at least 0.08 % by weight with respect to the polyethylene weight are especially preferred. Preferably, the total amount of AO1 and AO2 is at most 0.4 % by weight, more preferably at most 0.3 % by weight. Total amounts of AO1 and AO2 of at most 0.2 % by weight with respect to the polyethylene weight are especially preferred.

Preferably the weight ratio of AO1 to AO2 is from 1:10 to 10:1, more preferably from 1:5 to 5:1. Weight ratios of AO1 to AO2 from 1:2 to 2:1 are especially preferred.

Within the framework of the present invention, by "inorganic coloured pigment" is meant any mineral pigment whose colour is different from white. The amount of inorganic coloured pigment used in the composition according to the present invention ranges from 0.001 to 3 % by weight with respect to the polyethylene weight. Preferably this amount is at least 0.01 %, more preferably at least 0.1 % by weight with respect to the polyethylene weight. Often this amount does not exceed 2 %, most often it does not exceed 1 % by weight with repect to the polyethylene weight. Blue pigments, such as ultramarine blue (C.I. Pigment Blue 29, C.I. 77007) and cobalt blue (C.I. Pigment Blue 36, C. I. 77343 and C.I. Pigment Blue 28, C.I. 77346) are preferred in the polyethylene-based compositions according to the present invention used for the manufacturing of pipes and fittings for water transport. Blue sulphidic pigments are particularly preferred in polyethylene-based compositions according to the present invention especially when used for the manufacturing of pipes and fittings for drinking-water transport. Ultramarine blue (C.I. Pigment Blue 29) is very particularly preferred.

Both ethylene homopolymers and copolymers with one or more comonomers, as well as their mixtures can be used in the composition according to the present invention. Suitable comonomers are linear or branched olefins containing from 3 to 8 carbon atoms, such as, for example, butene-1, hexene-1, octene-1 and 4-methylpentene. The preferred comonomers are butene-1 and hexene-1. Butene-1 is particularly preferred.

The total content of comonomer(s) in the ethylene copolymer generally amounts from at least 0.01 mole % and most often from at least 0.05 mole % with respect to the ethylene mole %. The total amount of comonomer(s) usually does not exceed 10 mole % and most often 5 mole %. Good results are obtained with ethylene copolymers having from 0.05 to 5 mole %, more particularly from 0.3 to 2 mole % total comonomer content. Most often, the polyethylene used in the composition according to the present invention is a multimodal polyethylene, especially a multimodal polyethylene obtained by sequential polymerization in at least two reactors connected in series. Such multimodal polyethylenes are well known to those skilled in the art, and have been described for example in US 6,136,924 and US 6,225,421 patents. Especially preferred is a polyethylene such as described in the comparative example 9R of US 6,225,421 patent.

The melt flow index (measured according to ASTM D 1238 standard at 190°C under a load of 5 kg) ($MI_5$) of the polyethylene used in the composition according to the present invention ranges generally from 0.01 to 2 g/10 min. The polyethylene used in the composition according to the present invention has preferably a $MI_5$ of at least 0.05 g/10 min, more preferably of at least 0.1 g/10 min. The $MI_5$ of the polyethylene used in the composition according to the present invention does preferably not exceed 1.2 g/10 min, more preferably it does not exceed 0.8 g/10 min.

The density (as measured by ISO 1183-3 (1999) standard) of the polyethylene used in the composition according to the present invention is preferably at least equal to 935 $g/cm^3$ and more preferably at least equal to 940 $g/cm^3$. This density generally does not exceed 970 $g/cm^3$ and more particularly does not exceed 960 $g/cm^3$.

The polyethylene-based composition according to the present invention comprises preferably also at least one sterically hindered amine light stabilizer (HALS). This sterically hindered amine light stabilizer (HALS) is preferably selected from :

the polymer of epichlorhydrin and 2,2,4,4-tetramethyl-7-oxa-3,20-diazadispiro-[5. 1.11.2]heneicosan-21-one (IX), poly[[6-[(1,1,3,3-tetramethylbutyl)amino]-1,3,5-triazine-2,4-diyl] [(2,2,6,6-tetramethyl-4-piperidyl)imino]hexamethylene[(2,2,6,6-tetramethyl-4-piperidyl)imino]] (X), butanedioic acid, polymer with 4-hydroxy-2,2,6,6-tetramethyl-1-piperidineethanol (XI), 1,5,8,12-tetrakis[4,6-bis(N-butyl-N-1,2,2,6,6-pentamethyl-4-piperidylamino)-1,3,5-triazin-2-yl]-1,5,8,12-tetraazadodecane (XII), and their mixtures. Most preferred compositions are those comprising compound (IX).

Most often the total concentration of HALS in the composition according to the present invention is at least 0.01 % by weight, preferably at least 0.05 % by weight with respect to the polyethylene weight. Generally this concentration does not exceed 1 % by weight, preferably not 0.5 % by weight with respect to the polyethylene weight.

The polyethylene-based composition according to the present invention comprises advantageously also at least one UV absorber which is not a HALS. The following compounds (XIII) to (XIV), and their mixtures are preferred as non-HALS UV absorbers :

2-(2'-hydroxy-3'-tert-butyl-5'-methylphenyl)-5-chlorobenzotriazole (XIII), or 2-hydroxy-4-(n-octyloxy)benzophenone (XIV). Most preferred compositions are those comprising compound (XIII) as non-HALS UV absorber. Most often the total concentration of non-HALS UV absorbers in the composition according to the present invention is at least 0.005 % by weight, preferably at least 0.03 % by weight with respect to the polyethylene weight. Generally this concentration does not exceed 1 % by weight, preferably not 0.5 % by weight with respect to the polyethylene weight.

Advantageously the polyethylene-based composition according to the present invention contains also at least one non-phenolic antioxidant (AO3). This non-phenolic antioxidant AO3 is generally selected from organosulfur and organophosphorous compounds. Organophosphorous compounds such as organic phosphites and phosphonites are preferred. Particularly preferred are organic phosphites such as tris(2,4-di-tert-butylphenyl)phosphite and bis(2,4-di-tert-butylphenyl)pentaerythritol diphosphite. Triarylphosphites are especially preferred. Tris(2,4-di-tert-butylphenyl) phosphite is most particularly preferred. Most often the amount of AO3 in the composition according to the present invention is at least 0.005 % by weight, preferably at least 0.03 % by weight with respect to the polyethylene weight. Generally this concentration does not exceed 1 % by weight, preferably not 0.5 % by weight with respect to the polyethylene weight.

The polyethylene-based composition according to the present invention may also contain white pigments, such as titaniumdioxide (rutile type), and carbon black. In that case, the total concentration of white pigments and carbon black in the composition according to the present invention is generally at least 0.001 % by weight, preferably at least 0.01 % by weight with respect to the polyethylene weight. Generally this concentration does not exceed 1 % by weight, preferably not 0.5 % by weight with respect to the polyethylene weight.

The polyethylene-based composition according to the present invention generally does not contain organic pigments, especially phtalocyanine pigments.

The polyethylene-based composition according to the present invention may contain other conventional additives, such as antiacids, fire retardants, antistatic agents, lubricants, slip agents, processing aids etc. The content of each of these additives in the composition is generally less than 1 %, preferably less than 0.5 %, by weight with respect to the polyethylene weight.

The composition according to the present invention generally comprises at least 94 %, preferably at least 96 %, by weight of polyethylene with respect to the weight of the composition.

Polyethylene-based compositions according to the present invention which are especially preferred comprise :

- at least 96 % by weight of polyethylene,
- from 0.005 to 0.2 % by weight with respect to the polyethylene weight of compound (I),
- from 0.005 to 0.2 % by weight with respect to the polyethylene weight of compound (VII), wherein the weight ratio of compound (I) to compound (VII) is from 5:1 to 1:5,
- from 0.01 to 1 % by weight with respect to the polyethylene weight of compound (IX),
- from 0.005 to 1 % by weight with respect to the polyethylene weight of non-HALS UV absorber,
- from 0.005 to 1 % by weight with respect to the polyethylene weight of non-phenolic antioxidant (AO3),
- from 0.01 to 2 % by weight with respect to the polyethylene weight of inorganic blue pigment.

The polyethylene-based composition according to the present invention allows to obtain the following advantageous properties

(1) a good resistance to colour degradation upon UV weathering,
(2) a superior thermal stabilization,
(3) a very good resistance to thermal oxidation, even after exposition to UV weathering,
(4) a compliance with FDA and ECC laws for use in food contact applications,
(5) a good resistance against migration of the pigments, especially when objects made from the composition are contacted with water or with aqueous solutions,
(6) a stability of the mechanical properties of the objects made from the compositions when these are exposed to UV weathering,
(7) a very good suitability for the manufacturing of dimensionally stable shaped objects, free from warping or shrinkage, and
(8) an excellent dispersion of the inorganic coloured pigment, without using multiple pelletizations or masterbatches containing the inorganic coloured pigment.

The polyethylene-based composition according to the present invention can be used in any known process for the manufacturing of shaped polyethylene-based objects. It is especially suitable for the production of pipes and fittings. So, a further aspect of the present invention is the use of said polyethylene-based composition for the manufacturing of pipes and fittings. The composition according to the present invention is particularly suitable for the manufacturing of extruded pipes and injection-moulded fittings. It is especially appropriate for the manufacturing of pipes and fittings intended for the transport of pressurized fluids such as water. The composition according to the present invention is very particularly suitable for the manufacturing of pipes and fittings used for drinking-water transport.

Consequently the present invention finally relates to pipes and fittings comprising the said polyethylene-based composition.

In addition to the foregoing description of the invention, the following examples are provided to illustrate the present invention. The symbols, the units and measuring methods of the properties mentioned are explained hereinbelow. OIT : Oxygen Induction Time measured by Differential Scanning Calorimetry according to ASTM Standard D 3895-98, the analysis temperature being 200°C and using a heating rate of 20°C/min and an oxygen flow of $50 \pm 5$ ml/min. This property is measured on compression-moulded plaques prepared according to ASTM Standard D 1928-80 (thickness =4 mm) using a hydraulic press at 190°C; contact pressure of 5 MPa for 5 min; final pressure of 15 MPa for 3 min; cooling rate of 15°C/min to 40°C under a pressure of 15 MPa. The measurement was also carried out on UV weathered (according to DIN Standard 53387/1A in an ATLAS® Weatherometer CI35 using a radiation from 290 to 3000 nm (950 W/m$^2$), with a radiation from 290 to 400 nm corresponding to 58 W/m$^2$, a relative humidity of 60%, a black-body temperature of 65°C and a cyclus of 102 min dry-18 min spray; weathering times of 1022 h, 1500 h, 2030 h and 3015 h correspond to respectively 3.5 GJ/m$^2$ (OIT3.5), 5.25 GJ/m$^2$ (OIT5), 7 GJ/m$^2$ (OIT7) and 10.3 GJ/m$^2$ (OIT10) radiation energies) samples (discs having a diameter of approximately 8 mm and a thickness of 4 mm cut out of the compression-moulded plaques) from which 200 μm of weathered surface has been microtomically eliminated (Standard EN 1555/2 (1996).

Delta E : colour difference defined by the following equation :

$$\Delta E * ab = \sqrt{(\Delta L^*)^2 + (\Delta a^*)^2 + (\Delta b^*)^2}$$

wherein L*, a* and b* are the Hunter colour rectangular coordinates (CIE lab normalized system, 1976) and $\Delta$ values indicate the difference between the value after an irradiation time corresponding to a radiation energy of 3.5 GJ/m$^2$ (delta E3.5), 5.25 GJ/m$^2$ (delta E5), 7 GJ/m$^2$ (delta E7) or 10.3 GJ/m$^2$ (delta E10), and the value of the non-irradiated sample; delta E is measured on the same compression-moulded plaques as used for the measurement of OIT but which have been cut into 25x79x4 mm samples. The L*, a* and b* values are determined according to ASTM Standard D-6290 using a Hunterlab D25 colorimeter.

Elongation at break and Stress at yield : both measured according to EN638 Standard at 23°C on ISO 1 ½ compression-moulded samples having a thickness of 3 mm and using a crosshead speed of 50 mm/min. These measurements were also carried out on UV weathered samples such as described for the OIT measurements.

Example 1

A polyethylene-based composition consisting of the following ingredients :

- 987.9 g of a bimodal ethylene copolymer having an MI$_5$ of 0.48 g/10 min and a density of 948.5 g/cm$^3$ and comprising 51 % by weight of an ethylene homopolymer and 49 % by weight of a copolymer of ethylene and butene-1,
- 5 g of Ultramarine Blue pigment (C.I. Pigment Blue 29, C.I. 77007),
- 0.5 g of titaniumdioxyde (rutile type),
- 0.1 g of a blend comprising 10 % by weight of carbon black dispersed in 90 % by weight of BaSO$_4$,
- 1 g of calciumstearate,
- 0.75 g of pentaerytrityl tetrakis(3,5-di-tert-butyl-4-hydroxyphenyl) propionate (AO2),
- 0.75 g of bis[3,3-bis-( 4-hydroxy-3-tert-butyl phenyl )butanoic acid]glycolester (AO1),
- 2 g of the polymer of epichlorhydrin and 2,2,4,4-tetramethyl-7-oxa-3,20-diazadispiro-[5. 1.11.2]heneicosan-21-one (HALS),
- 1 g of 2-(2'-hydroxy-3'-tert-butyl-5'-methylphenyl)-5-chlorobenzotriazole (UV absorber), and
- 1 g of tris(2,4-di-tert-butylphenyl)phosphite (AO3)

which were dry blended in a screw blender at high speed.

The resulting blend was then pelletized at a temperature of 210°C on a single screw AXON BX-19 extruder. These pellets with an MI$_5$ of 0.48 g/10 min and a density of 952.5 g/cm$^3$ have been converted into compression-moulded platens, which have been submitted subsequently to accelerated UV weathering tests. The results of thermal stability (OIT), colour degradation (Delta E), elongation at break and stress at yield, before and after UV weathering are listed in table 1.

Comparative example 2R

Example 1 was repeated, except that the polyethylene-based composition consisted of the following ingredients :

- 988.6 g of the bimodal ethylene copolymer used in example 1,
- 5 g of Ultramarine Blue pigment (C.I. Pigment Blue 29, C.I. 77007),
- 0.5 g of titaniumdioxyde (rutile type),
- 0.1 g of a blend comprising 10 % by weight of carbon black dispersed in 90 % by weight of $BaSO_4$,
- 1 g of calciumstearate,
- 1.75 g of pentaerytrityl tetrakis(3,5-di-tert-butyl-4-hydroxyphenyl) propionate,
- 1.75 g of tris(2,4-di-tert-butylphenyl)phosphite, and
- 1.3 g of butanedioic acid, polymer with 4-hydroxy-2,2,6,6-tetramethyl-1-piperidineethanol (HALS).

The results from table 1 show that the composition from example 1 exhibits superior resistance against thermal oxidation and comparable colour degradation after UV weathering with respect to the composition from comparative example 2.

Comparative example 3R

Example 1 was repeated, except that the polyethylene-based composition consisted of the following ingredients :

- 992.9 g of the bimodal ethylene copolymer used in example 1,
- 1.1 g of (phtalocyaninato)copper pigment (C.I. Pigment Blue 15, C.I. 74160),
- 0.2 g of titaniumdioxyde (rutile type),
- 1 g of calciumstearate,
- 1.75 g of pentaerytrityl tetrakis(3,5-di-tert-butyl-4-hydroxyphenyl) propionate,
- 1.75 g of tris(2,4-di-tert-butylphenyl)phosphite, and
- 1.3 g of butanedioic acid, polymer with 4-hydroxy-2,2,6,6-tetramethyl-1-piperidineethanol (HALS)

and that the pelletization had to be repeated several times in order to obtain a satisfying dispersion of the pigment in the composition.

The results from table 1 show that the composition from example 1 exhibits superior resistance against thermal oxidation after UV weathering with respect to the composition from comparative example 3.

Table 1

| Property | Unit | Ex.1 | Ex.2R | Ex.3R |
|---|---|---|---|---|
| OIT | min | 80 | 80 | 80 |
| OIT3.5 | min | 73 | 21 | 25 |
| OIT5 | min | 57 | 13 | 20 |
| OIT 7 | min | 47 | 13 | 14 |
| OIT10 | min | 42 | 12 | 13 |
| Delta E3.5 | - | 2.44 | 2.93 | 2.35 |
| Delta E5 | - | 3.48 | 3.67 | 3.1 |
| Delta E7 | - | 3.78 | 3.75 | 3.65 |
| Delta E10 | - | 4.21 | 4.35 | 3.91 |
| Elongation at break | % | 1100 | 1100 | 1100 |
| Elongation at break 3.5 | % | 950 | 950 | 950 |
| Elongation at break 5 | % | 950 | 950 | 950 |
| Elongation at break 7 | % | 950 | 950 | 950 |

Table 1 (continued)

| Property | Unit | Ex.1 | Ex.2R | Ex.3R |
|---|---|---|---|---|
| Elongation at break 10 | % | 910 | 907 | 890 |
| Stress at yield | MPa | 27 | 27 | 27 |
| Stress at yield 3.5 | MPa | 27 | 27 | 27 |
| Stress at yield 5 | MPa | 27 | 27 | 27 |
| Stress at yield 7 | MPa | 27 | 27 | 27 |
| Stress at yield 10 | MPa | 26 | 27 | 27 |

**Claims**

1. Polyethylene-based composition comprising at least two different phenolic antioxidants (AO1 and A02) and at least one inorganic coloured pigment wherein the amounts of AO1 and AO2 each range independently from 0.001 to 0.3 % by weight with respect to the polyethylene weight, and the amount of inorganic coloured pigment ranges from 0.001 to 3 % by weight with respect to the polyethylene weight.

2. Polyethylene based composition according to claim 1 wherein the weight ratio of AO1 to AO2 is from 1:10 to 10:1.

3. Polyethylene-based composition according to claim 1 or 2 wherein the phenolic antioxidant AO1 is selected from :

   bis[3,3-bis-( 4-hydroxy-3-tert-butyl phenyl )butanoic acid]glycolester (I),
   4,4',4"-[(2,4,6-trimethyl-1,3,5-benzenetriyl)tris(methylene )]tris[2,6 bis(1,1-dimethylethyl)phenol] (II),
   1,3,5-triazine-2,4,6(1H,3H,5H)-trione,1,3,5-tris[[3,5-bis(1,1-dimethylethyl)-4-hydroxyphenyl]methyl]- (III),
   4,4',4"-(1-methyl-1-propanyl-3-ylidene)tris[2-(1,1-dimethylethyl)-5-methylphenol (IV),
   2,6-bis[[3-(1,1-dimethylethyl)-2-hydroxy-5-methylphenyl]octahydro-4, 7-methano-1 H-indenyl]-4-methyl-phenol (V),
   benzenepropanoic acid, 3-(1,1-dimethylethyl)-4-hydroxy-5-methyl-, 2,4,8,10-tetraoxaspiro[5.5]undecane-3,9-diylbis(2,2-dimethyl-2,1-ethanediyl) ester (VI),

   and their mixtures.

4. Polyethylene-based composition according to any of the claims 1 to 3 wherein the phenolic antioxidant AO2 is selected from :

   pentaerytrityl tetrakis(3,5-di-tert-butyl-4-hydroxyphenyl) propionate (VII), octadecyl-3-(3',5'-di-tert-butyl-4-hydroxyphenyl) propionate (VIII), and their mixtures.

5. Polyethylene-based composition according to claim 1 or 2 wherein AO1 is compound (I) and wherein AO2 is compound (VII).

6. Polyethylene-based composition according to any of the preceding claims further comprising at least one sterically hindered amine light stabilizer (HALS).

7. Polyethylene-based composition according to claim 6 wherein the sterically hindered amine light stabilizer (HALS) is selected from :

   the polymer of epichlorhydrin and 2,2,4,4-tetramethyl-7-oxa-3,20-diazadispiro-[5. 1.11.2]heneicosan-21-one (IX),
   poly[[6-[(1,1,3,3-tetramethylbutyl)amino]-1,3,5-triazine-2,4-diyl] [(2,2,6,6-tetramethyl-4-piperidyl)imino]hexamethylene[(2,2,6,6-tetramethyl-4-piperidyl)imino]] (X),
   butanedioic acid, polymer with 4-hydroxy-2,2,6,6-tetramethyl-1-piperidineethanol (XI),
   1,5,8,12-tetrakis[4,6-bis(N-butyl-N-1,2,2,6,6-pentamethyl-4-piperidylamino)-1,3,5-triazin-2-yl]-1,5,8,12-tetraazadodecane (XII), and their mixtures.

8. Polyethylene-based composition according to any of the preceding claims further comprising at least one UV absorber which is not a sterically hindered amine light stabilizer (HALS).

9. Polyethylene-based composition according to any of the preceding claims further comprising at least one non-phenolic antioxidant (AO3).

10. Polyethylene-based composition according to claim 9 wherein AO3 is an organophosphorous compound.

11. Polyethylene-based composition according to any of the preceding claims wherein the inorganic coloured pigment is a blue pigment.

12. Polyethylene-based composition according to claim 11 wherein the inorganic coloured pigment is a blue sulphidic pigment.

13. Polyethylene-based composition according to any of the preceding claims wherein the polyethylene is a multimodal polyethylene with a density as measured according to ISO 1183-3 (1999), ranging from 935 to 970 g/cm$^3$.

14. Use of a polyethylene-based composition according to any of the preceding claims for the manufacturing of pipes and fittings.

15. Use of a polyethylene-based composition according to claim 14 wherein the pipes and fittings are used for drinking-water transport.

16. Pipes and fittings comprising a polyethylene-based composition according to any one of claims 1 to 13.

17. Pipes and fittings according to claim 16 used for drinking-water transport.

## EUROPEAN SEARCH REPORT

European Patent Office

| Application Number |
| --- |
| EP 02 07 5622 |

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
| --- | --- | --- | --- |
| X,D | WO 01 62839 A (CLARIANT FINANCE BVI LTD;CLARIANT INT LTD ; LICHTBLAU ALEXANDER (D) 30 August 2001 (2001-08-30) * claims 1-3 * * example 1 * | 1-17 | C08K5/00 |
| X | US 4 746 692 A (HAYDEN EARL E) 24 May 1988 (1988-05-24) | 1-4,6,7, 14-17 | |
| A | * claim 1 * * column 2, line 58-60 * * column 3-4 * * column 5, line 55 - column 6, line 45 * | 5,8-13 | |
| E | WO 02 12385 A (CLARIANT INT LTD ;KROEHNKE CHRISTOPH (DE); MALIK JAN (FR); CLARIAN) 14 February 2002 (2002-02-14) * claims 1-10 * * table 1 * | 1-17 | |
| A | ALLEN, N. S. ET AL: "Light stabilizer, antioxidant and pigment interactions in the thermal and photochemical oxidation of polyethylene films" POLYM. DEGRAD. STAB. (1989), 24(1), 17-31 , XP002198094 * the whole document * | 1-17 | TECHNICAL FIELDS SEARCHED (Int.Cl.7)  C08K |

The present search report has been drawn up for all claims

| Place of search | Date of completion of the search | Examiner |
| --- | --- | --- |
| MUNICH | 6 May 2002 | Dury, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9

**ANNEX TO THE EUROPEAN SEARCH REPORT
ON EUROPEAN PATENT APPLICATION NO.**  EP 02 07 5622

This annex lists the patent family members relating to the patent documents cited in the above–mentioned European search report.
The members are as contained in the European Patent Office EDP file on
The European Patent Office is in no way liable for these particulars which are merely given for the purpose of information.

06–05–2002

| Patent document cited in search report | | Publication date | Patent family member(s) | | Publication date |
|---|---|---|---|---|---|
| WO 0162839 | A | 30–08–2001 | AU | 3217301 A | 03–09–2001 |
| | | | WO | 0162839 A1 | 30–08–2001 |
| US 4746692 | A | 24–05–1988 | AT | 78840 T | 15–08–1992 |
| | | | AU | 599976 B2 | 02–08–1990 |
| | | | AU | 7251487 A | 12–11–1987 |
| | | | CA | 1311072 A1 | 01–12–1992 |
| | | | DE | 3780712 D1 | 03–09–1992 |
| | | | DE | 3780712 T2 | 10–12–1992 |
| | | | DK | 226387 A | 06–11–1987 |
| | | | EP | 0250076 A2 | 23–12–1987 |
| | | | ES | 2033841 T3 | 01–04–1993 |
| | | | FI | 871952 A ,B, | 06–11–1987 |
| | | | JP | 2603253 B2 | 23–04–1997 |
| | | | JP | 62257944 A | 10–11–1987 |
| | | | JP | 2726650 B2 | 11–03–1998 |
| | | | JP | 9100375 A | 15–04–1997 |
| | | | KR | 9605623 B1 | 30–04–1996 |
| | | | NO | 871868 A | 06–11–1987 |
| | | | NZ | 220180 A | 27–11–1990 |
| WO 0212385 | A | 14–02–2002 | WO | 0212385 A1 | 14–02–2002 |

EPO FORM P0459

For more details about this annex : see Official Journal of the European Patent Office, No. 12/82